# EUROPEAN PATENT APPLICATION

(11) **EP 2 869 068 A1**
(43) Date of publication of application: **06.05.2015**
(21) Application number: 13191073.9
(22) Date of filing: 31.10.2013
(51) Int. Cl.: G01N 29/04, B21J 15/28

(54) **Method for ultrasonic testing of bolted and riveted joints in structures**

(71) Applicant: Rigas Tehniska Universitate, 1658 Riga (LV)
(72) Inventor: Urbahs, Aleksandrs, LV-1029 Riga (LV); Banov, Mukharbiy, LV-1021 Riga (LV); Urbaha, Margarita, LV-1029 Riga (LV); Carjova, Kristine, LV-1055 Riga (LV); Fescuks, Jurijs, LV-1063 Riga (LV)
(74) Representative: Anohins, Vladimirs

(57) **Abstract**

A method for quasi-AE ultrasonic testing of bolted and riveted joints in structures made of material(s) conductive of ultrasound, using equipment normally used as an acoustic emission equipment, where its calibration unit is used as a ultrasonic generator, its transducer is used as a ultrasonic receiver, and its data acquisition device is used as an evaluation unit.

## Description

### TECHNICAL FIELD

The present invention relates to methods for quasi-Acoustic Emision (AE) ultrasonic testing of bolted and riveted joints in structures made of materials conductive of ultrasound, such as structural units of bridges, aircraft, watercraft etc., using for this purpose acoustic emission equipment normally used for acoustic emission testing.

### BACKGROUND ART

Bolted and riveted joints are widely used in various machines and buildings. Particularly, they have come into very extensive use in the industries of shipbuilding and aircraft construction, as well as in structural units of lift-and-carry machines, bridges and other frameworks.

In operation, the most frequent defects of bolted and riveted joints are (i) weakening of the tension between connection elements (bolts and/or rivets) and corresponding connected parts of a structure, (ii) deformations of the connection elements caused by supercharge loading, and (iii) corrosion damage of surfaces of the connection elements. Such defects result in decrease of load-carrying ability of the bolted and riveted joints and lowering of reliability of the structures. Thus, in order to evaluate the current level of reliability of a structure and, basing on the results of such evaluation and take a decision as to whether to proceed any further with the operation of the structure, it is preferable to use nondestructive testing (NDT) and analyze results of NDT of the bolted and riveted joints thereof.

There are known in the art acoustic techniques of NDT, there being among them methods based on AE.

The AE methods of NDT deal with the sound waves produced when a material undergoes stress (internal change), as a result of an external force. Consequently, it is required that a certain loading be applied to the tested structure, so that the testing equipment can "hear" the sounds and/or ultrasounds of the loaded structure.

A typical AE method of NDT is described in 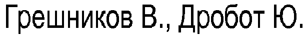 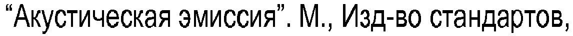 1976 (V.Greshnikov, Yu.Drobot. Acoustic emission. Moscow, published by "Izdatel'stvo standartov", 1976, in Russian; the book is available, e.g., at http://bib.convdocs.org/v4783/?cc=1&view=pdf).

This closest to the present invention prior art method is performed in the following sequence:
- receiving piezoelectric transducer(s) of AE signals are installed on an article to be tested;
- a static or dynamic loading is applied to the article,
- the AE signals irradiated by the article are detected by the transducer(s) of AE signals;
- the intensity level and/or the amplitude of the recorded AE signal are measured; and
- the condition of the item is evaluated basing on the results of comparison of the intensity level and/or the amplitude of the recorded AE signal to an unacceptable reliability level, the latter being established basing on results of testing identical articles in known good and known bad state.

However, this method is applicable for testing bolted and riveted joints only to a limited extent. Application of loadings to the joint elements, which causes the generation of ultrasonic signals, is a sine qua non condition for AE testing, and the latter is impossible without loading the tested object. However, it is rather laborious and time-consuming to provide a proper loading for each particular object, especially for very large objects such as bridges, aircraft structures etc. Moreover, when loading bolted and riveted joints, high-level parasitic noises are generated due to mutual friction between the loaded parts of the joint, which makes the task of detecting and analyzing a valid signal caused, e.g., by a developing fatigue fracture or a progressing corrosion in the elements of the joint, very difficult.

This problem could be solved by providing a method for ultrasonic NDT of structures without loading thereof, using the existing AE equipment. Such a technology could be characterized as quasi-AE and ultrasonic.

The above problem is solved by the present invention.

### BRIEF DESCRIPTION OF INVENTION

The present invention is directed to a method for ultrasonic testing of bolted and riveted joints in structures made of material(s) conductive of ultrasound. The authors of this invention have named this method quasi-AE ultrasonic method. The quasi-AE and ultrasonic method according to the present invention comprises the following steps:
(a) providing a ultrasonic equipment comprising: a ultrasonic generator capable of generating ultrasonic signals in the media of both bolts or rivets and joined parts, a ultrasonic receiver capable of receiving the signal from the ultrasonic generator transmitted through the media, and an evaluation unit capable of analyzing the signal from the ultrasonic receiver and appraising the condition of a bolted or riveted joint;
(b) connecting one of (i) said ultrasonic generator and (ii) said ultrasonic receiver to an end of a bolt or rivet and the other to one of the joined parts;
(c) generating a ultrasonic signal by the ultrasonic generator, receiving the signal transmitted through the media by the ultrasonic receiver, and transmitting the received signal to the evaluation unit;
(d) using said evaluation unit, analyzing the signal from the ultrasonic receiver and appraising, in pass/fail terms, the condition of the individual bolted or riveted joint currently under checking,
(e) repeating the steps (a) to (d) until all individual bolted or riveted joints belonging to a cluster of such joints are checked, and
(f) evaluating the operational capability of the cluster of individual bolted or riveted joints basing on the results obtained in the step (d) for each individual joint belonging to the cluster.

Quasi-AE ultrasonic testing by the method of invention can be carried out whether or not the tested structure is under load.

When testing a non-loaded structure, an ultrasonic signal is generated and the signal transmitted through the media is received and analyzed, whereas conventional AE methods are not applicable in the conditions where there is no signal irradiated by the article under load itself. The possibility of testing non-loaded structures is an advantage of the method of invention.

When testing a loaded structure, an ultrasonic signal is generated and the signal transmitted through the media is received and immediately analyzed, whereas in case of testing by a conventional AE method, the signal should be first isolated from parasitic noises and only then it can be used for analyzing. The method of invention provides a higher quality, precision, and efficiency of evaluation.

Anyway, whether a tested structure is under load or not, the received signal is compared to a calibrated signal obtained from the ultrasonic generator upon the transmission through an identical bolted or riveted joint whose good state is known. Thus, comparing the signal received by the ultrasonic receiver, the condition of the individual bolted or riveted joints is evaluated in terms of pass/fail.

According to the invention, said ultrasonic equipment is an acoustic emission equipment comprising a transducer adapted to detect acoustic emission events and convert acoustic signals into electric voltage signals, a data acquisition device adapted to perform analog-to-digital conversion of signals, detection of useful signals and evaluation of their parameters, data analyzing and charting, and a calibration unit (also known in the industry as "pulsar") normally used to calibrate the acoustic emission equipment by emitting a reference signal converted into an acoustic signal, said calibration unit serving as the ultrasonic generator, said transducer serving as the ultrasonic receiver, and said data acquisition device serving as the evaluation unit. The method is applicable whether or not the tested structure is under load.

### DETAILED DESCRIPTION OF INVENTION WITH REFERENCE TO ATTACHED DRAWING

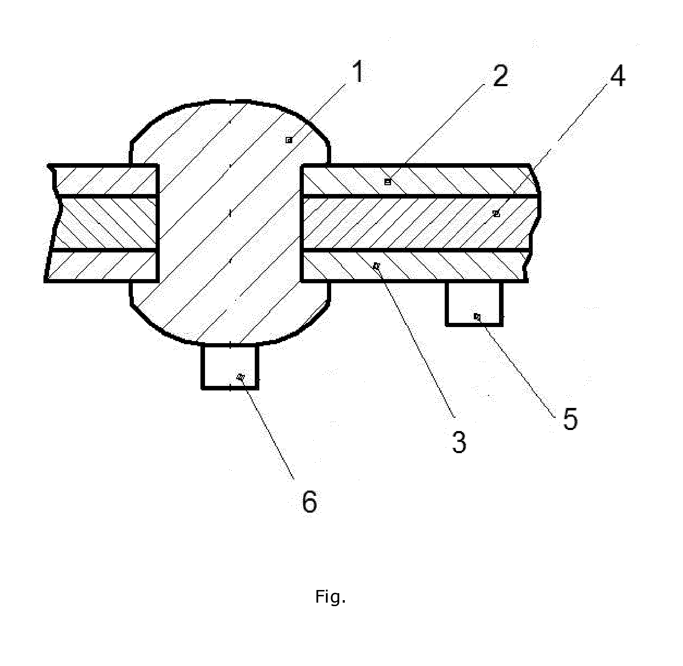

The attached drawing schematically illustrates a non-limiting example of implementation of the method according to the present invention.

Fig. shows a fragment of a rivet joint including a rivet 1, butt straps 2 and 3, and a main beam 4. A pulsar 5 serving as an ultrasonic generator is attached to the butt strap 3, and a transducer 6 serving as a ultrasonic receiver is attached to the rivet 1. Both the pulsar 5 and transducer 6 belong to a standard AE equipment, which comprises also a data acquisition device (not shown) serving as the evaluation unit and connection means (not shown), such as electric wires, connecting the transducer to said data acquisition device. It will be appreciated by those skill in the art that the communication between these data-interchange units may be alternatively accomplished by radio, through a fiber optic line etc.

The pulsar 5 and/or transducer 6 may be attached to corresponding parts magnetically.

It will be appreciated by those skilled in the art that the method of invention is equally applicable both to rivets and bolts. Besides, the method allows using an inverted connection pattern where the pulsar 5 is attached to the rivet 1, and the transducer 6 is attached to either butt strap 2 or 3. Therefore, there is no need to present additional drawings here.

Anyway, various modifications, changes, and versions are possible within the scope of the present invention which is defined only by the appended claims.

## Claims

1. A method for quasi-AE ultrasonic testing of bolted and riveted joints in structures made of material(s) conductive of ultrasound, the method comprising the steps of:
(a) providing a ultrasonic equipment comprising:
- a ultrasonic generator capable of generating ultrasonic signals in the media of both bolts or rivets and joined parts,
- a ultrasonic receiver capable of receiving the signal from the ultrasonic generator transmitted through the media, and
- an evaluation unit capable of analyzing the signal from the ultrasonic receiver and appraising the condition of a bolted or riveted joint;
(b) connecting one of (i) said ultrasonic generator and (ii) said ultrasonic receiver to an end of a bolt or rivet and the other to one of the joined parts;
(c) generating a ultrasonic signal by the ultrasonic generator, receiving the signal transmitted through the media by the ultrasonic receiver, and transmitting the received signal to the evaluation unit;
(d) using said evaluation unit, analyzing the signal from the ultrasonic receiver and appraising, in pass/fail terms, the condition of the individual bolted or riveted joint currently under checking,
(e) repeating the steps (a) to (d) until all individual bolted or riveted joints belonging to a cluster of such joints are checked, and
(f) evaluating the operational capability of the cluster of individual bolted or riveted joints basing on the results obtained in the step (d) for each individual joint belonging to the cluster.

2. The method according to claim 1, wherein said ultrasonic equipment is an acoustic emission equipment comprising:
- a transducer adapted to detect acoustic emission events and convert acoustic signals into electric voltage signals,
- a data acquisition device adapted to perform analog-to-digital conversion of signals, detection of useful signals and evaluation of their parameters, data analyzing and charting, and
- a calibration unit normally used to calibrate the acoustic emission equipment by emitting a reference signal converted into an acoustic signal,
said calibration unit serving as the ultrasonic generator,
said transducer serving as the ultrasonic receiver, and
said data acquisition device serving as the evaluation unit.

3. The method according to claim 2, wherein the method is applicable whether or not the tested structure is under load.
